# EUROPÄISCHE PATENTSCHRIFT

(11) **EP 3 059 433 B1**
(45) Veröffentlichungstag und Bekanntmachung des Hinweises auf die Patenterteilung: **10.04.2019**
(21) Anmeldenummer: 16156313.5
(22) Anmeldetag: 18.02.2016
(51) Int. Cl.: F02K 1/72, F02K 3/06, F02C 7/14

(54) **GASTURBINENTRIEBWERK MIT ÖLKÜHLER IN DER TRIEBWERKSVERKLEIDUNG**
GAS TURBINE ENGINE WITH OIL COOLER IN THE ENGINE CLADDING
TURBINE A GAZ AVEC REFROIDISSEUR D'HUILE DANS L'HABILLAGE DE LA TURBINE

(30) Priorität: 23.02.2015 DE 102015203218
(43) Veröffentlichungstag der Anmeldung: 24.08.2016
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE); PÖNICK, Sascha, 15834 Rangsdorf (DE)
(74) Vertreter: Hoefer & Partner Patentanwälte mbB

(56) Entgegenhaltungen:
- EP-A2- 2 522 831
- FR-A1- 2 902 831
- FR-A1- 2 958 974
- FR-A1- 2 970 465
- FR-A1- 2 987 602
- US-B2- 8 677 733

## Beschreibung

Die Erfindung bezieht sich auf ein Fluggasturbinentriebwerk mit einem Kerntriebwerk, welches von einem Nebenstromkanal umgeben ist. Der Nebenstromkanal wird durch eine radial äußere Triebwerksverkleidung umschlossen, an deren hinterem Bereich eine Schubumkehrvorrichtung vorgesehen ist, welche relativ zu der Triebwerksverkleidung bewegbar ist.

Im Einzelnen betrifft die Erfindung ein Fluggasturbinentriebwerk gemäß den Merkmalen des Oberbegriffs des Anspruchs 1. Die Erfindung bezieht sich somit auf ein Fluggasturbinentriebwerk mit einer den Nebenstromkanal umschließenden vorderen Verkleidung und einer in Axialrichtung verschiebbaren hinteren Verkleidung, sowie mit in dem Nebenstrom angeordneten Statorschaufeln (OGVs), wobei im Bereich der Statorschaufeln an der Innenseite der vorderen Verkleidung Ausnehmungen zur Ableitung von Fluid aus dem Nebenstromkanal ausgebildet sind.

Aus dem Stand der Technik ist es bekannt, Wärmetauscher entweder an dem Kerntriebwerk oder an dem Gehäuse des Fans oder im Bereich von Streben im Nebenstromkanal anzubringen. Hierbei ist es bekannt, entweder Matrixkühler mit einer Vielzahl von Durchströmungskanälen oder Oberflächenkühler mit einer vergrößerten Oberfläche zu verwenden.

Bei Fluggasturbinentriebwerken, welche einen Fan aufweisen, der über ein Getriebe angetrieben wird, ergibt sich eine sehr große Wärmemenge, welche aus dem Triebwerk abgeführt werden muss. Die aus dem Stand der Technik bekannten Vorgehensweisen, bei welchen Oberflächenkühler oder Matrixkühler verwendet werden, die mit Luft aus dem Nebenstromkanal beaufschlagt werden und bei denen die Luft anschließend entweder in den Nebenstromkanal rückgeleitet oder zur Umgebung abgeführt wird, erweisen sich dabei aus Sicht der Gesamteffizienz des Flugtriebwerks als nicht geeignet.

Die aus dem Stand der Technik bekannten Konstruktionen erfordern jeweils eine Anpassung der äußeren Abmessungen des Gehäuses, wobei dieses wegen der
Ölkühler oftmals axial verlängert werden muss. Dies führt in nachteiliger Weise zu höherem Gewicht und erhöhtem aerodynamischen Widerstand und behindert die Zugänglichkeit zu radial innen liegenden Baugruppen. Die Verwendung von Kühlern im Gehäuse des Fans oder im Bereich von Streben oder Leitschaufeln im Nebenstromkanal beeinträchtigt die Ausgestaltung von Schubumkehr-Kaskaden und erweist sich auch aus diesem Grunde als ungünstig.

Weiterhin ergibt sich bei den aus dem Stand der Technik bekannten Konstruktionen der Nachteil, dass moderne Gasturbinentriebwerke mit einem hohen Nebenstromverhältnis größere Ölkühler und Wärmetauscher benötigen, welche bei den bekannten Konstruktionen nicht oder nur mit hohem Aufwand installiert werden können, da der erforderliche Bauraum nicht oder nur beschränkt verfügbar ist.

Die bekannten Konstruktionen zeichnen sich somit durch ein hohes Gewicht, vergrößerte Baugrößen und konstruktive Nachteile aus.

Zum Stand der Technik wird auf die US 8,677,733 B2 hingewiesen. Dort ist eine Triebwerksverkleidung mit einer Schubumkehrvorrichtung gezeigt, bei welcher eine hintere Verkleidung mittels eines separaten Antriebs in Axialrichtung verschiebbar ist. Die Verschiebung erfolgt in zwei Stufen. In einer ersten Stufe wird die hintere Verkleidung nur über einen Teil der maximal möglichen Verschiebelänge verfahren, um einen Ringspalt zu öffnen, durch welchen Luft aus dem Nebenstromkanal zur Umgebung hin abgeführt werden kann, um den Querschnitt der Ausströmdüse des Nebenstromkanals zu verändern. In einer zweiten Position erfolgt eine vollständige Verschiebung der hinteren Verkleidung, um mittels eines zweiten, separaten Antriebs die Kaskadenelemente in die sich bildende Schubumkehröffnung einzubringen. Gleichzeitig wird der Nebenstromkanal mittels türartiger Sperrelemente verschlossen, so dass die gesamte Strömung zur Schubumkehr gegen die Flugrichtung umgeleitet werden kann.

Die teilweise Verschiebung der hinteren Verkleidung in die erste Position erfolgt beispielsweise, um Vibrationen oder Strömungsablösungen am Fan zu vermeiden und ein Flattern des Fans zu verhindern.

Der Erfindung liegt die Aufgabe zugrunde, ein Fluggasturbinentriebwerk der eingangs genannten Art zu schaffen, welches bei einfachem Aufbau und einfacher, kostengünstiger Herstellbarkeit in effektiver Weise mit einem Wärmetauscher bzw. Ölkühler und/oder Pre-Cooler (Air Cooled Air Cooler) versehen werden kann.

Die FR 2 902 831 A1, welche den nächstkommenden Stand der Technik bildet, offenbart eine Triebwerksverkleidung eines Fluggasturbinentriebwerks, mit einem Kerntriebwerk und einem dieses umgebenden Nebenstromkanal, mit einer den Nebenstromkanal umschließenden vorderen Verkleidung und einer Verkleidung, sowie mit in dem Nebenstromkanal angeordneten Statorschaufeln, wobei im Bereich der Statorschaufeln an der Innenseite der vorderen Verkleidung Ausnehmungen zur Ableitung von Fluid aus dem Nebenstromkanal ausgebildet sind, wobei das durch die Ausnehmungen abgeführte Fluid mittels Strömungskanälen durch die vordere Verkleidung geführt, mit zumindest einem Wärmetauscher in Kontakt gebracht und nachfolgend zur Umgebung abgeleitet wird.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das durch die Ausnehmungen abgeführte Fluid mittels Strömungskanälen durch die vordere Verkleidung geführt, mit zumindest einem Wärmetauscher in Kontakt gebracht und nachfolgend zur Umgebung abgeleitet wird.

In besonders günstiger Weiterbildung der Erfindung ist vorgesehen, dass der Wärmetauscher innerhalb der vorderen Verkleidung angeordnet ist, wobei bevorzugterweise zumindest ein Wärmetauscher im Bereich zwischen der vorderen Verkleidung und der hinteren Verkleidung positioniert ist. Der Kern der Erfindung liegt somit darin, die Strömungswege der für die Wärmetauscher benötigten Luft in zwei grundsätzliche Strömungswege zu unterteilen, nämlich einen Strömungsweg für die Reisekonfiguration und einen zusätzlichen Strömungsweg für eine maximale Startleistung des Fluggasturbinentriebwerks, bei der die Spitzenwärmelasten abzuführen sind. Für die Reisekonfiguration wird die Luft im Bereich der Statorschaufeln aus dem Nebenstromkanal entnommen und dem zumindest einen Wärmetauscher zugeführt. Der Wärmetauscher ist dabei entweder direkt radial außerhalb der Statorschaufeln in der vorderen äußeren Verkleidung im Bereich des Fangehäuses angeordnet oder er befindet sich im Anströmbereich der vorderen Verkleidung. Die durch den Wärmetauscher strömende Luft wird dann durch einen Spalt zwischen der vorderen und der hinteren Verkleidung abgeführt oder im Bereich der vorderen Verkleidung über ein dort angeordnetes Enteisungssystem zur Umgebung hin abgeleitet.

Bei einer Konfiguration für die maximale Startleistung wird ein zusätzliches Volumen von Kühlluft aus dem Nebenstromkanal entnommen und zusammen mit der Luft, welche zur Änderung des Querschnitts einer Austrittsdüse des Nebenstromkanals zur Umgebung abgeführt wird, durch einen Wärmetauscher geleitet.

Insgesamt ist es bei der erfindungsgemäßen Lösung vorteilhaft, dass die Luft, welche zur Optimierung der Strömung im Nebenstromkanal im Bereich der Statorschaufeln entnommen wird, für die Wärmetauscher genutzt wird. Es erfolgt erfindungsgemäß somit eine optimierte Entnahme von Wärmetauscherluft aus dem Nebenstromkanal, welche zu keinen zusätzlichen Energieverlusten führt, da diese Luftentnahme zur Strömungsverbesserung im Nebenstromkanal beiträgt.

Durch die Ausleitung der Luft durch einen Spalt zwischen der vorderen Verkleidung und der hinteren Verkleidung, welcher für die Querschnittsverstellung der Austrittsdüse bei maximaler Startleistung geöffnet ist, kann diese Luft in besonders effektiver Weise zur zusätzlichen Wärmeableitung verwendet werden. Dabei ist es besonders vorteilhaft, dass das Fluid (Kühlluft) nach dem Wärmetauscher durch Schaufeln eines im Bereich zwischen der vorderen Verkleidung und der hinteren Verkleidung angeordneten, zur Strömungsführung dienenden Kaskadenelements strömungsoptimiert geführt und durch den Spalt zwischen der vorderen Verkleidung und der hinteren Verkleidung abgeleitet wird. Es wird somit erfindungsgemäß das bereits vorhandene Kaskadenelement, welches als klassisches Kaskadenelement oder als Petal-Kaskade ausgebildet sein kann, genutzt. Zusätzliche Bauelemente um die aus dem Wärmetauscher abströmende Luft abzuleiten sind somit nicht erforderlich. Diese wird vielmehr durch in Strömungsrichtung hinten liegende Schaufeln der Kaskaden und eine strömungsoptimiert ausgebildete Vorderkante der hinteren Verkleidung geleitet. Die Ausgestaltung des Kaskadenelements und deren hinterer Schaufeln sowie der gerundeten Vorderkante der hinteren Verkleidung dient dabei ursprünglich zur Optimierung der Strömung bei maximaler Startleistung bzw. bei Schubumkehrbetrieb. Es ergibt sich erfindungsgemäß somit eine Verringerung von Druckverlusten im Nebenstromkanal, verbunden mit einer optimierten Kühlluftführung zu den Wärmetauschern. Durch den dabei zur Verfügung stehenden Bauraum ist es möglich, relativ große Wärmetauscher vorzusehen. Es ergibt sich somit ein synergetischer Effekt, da bei einer Konfiguration des Gasturbinentriebwerks mit maximaler Startleistung ein Teil der Luftströmung aus dem Nebenstromkanal zur Verringerung des nominell nötigen Querschnitts der Austrittsdüse des Nebenstromkanals (kalte Düse) genutzt werden kann, und dennoch die bei dieser Konfiguration des Gasturbinentriebwerks anfallende höhere Wärmemenge betriebssicher abzuleiten zu können. Insgesamt ergibt sich somit eine erhebliche Gewichtsreduzierung und eine Steigerung des Wirkungsgrades sowie der Zuverlässigkeit des Gasturbinentriebwerks.

Im Folgenden wird die Erfindung anhand eines Ausführungsbeispiels beschrieben. Dabei zeigt:
- Fig. 1: eine schematische Darstellung eines Fluggasturbinentriebwerks gemäß der vorliegenden Erfindung,
- Fig. 2: eine schematische Seiten-Schnittansicht eines Ausführungsbeispiels in einer Reisekonfiguration,
- Fig. 3: eine Ansicht, analog Fig. 2, in einer Reisekonfiguration,
- Fig. 4: eine vergrößerte Detailansicht gemäß Fig. 2, und
- Fig. 5: eine vergrößerte Darstellung, analog Fig. 4, der Reisekonfiguration gemäß Fig. 3.

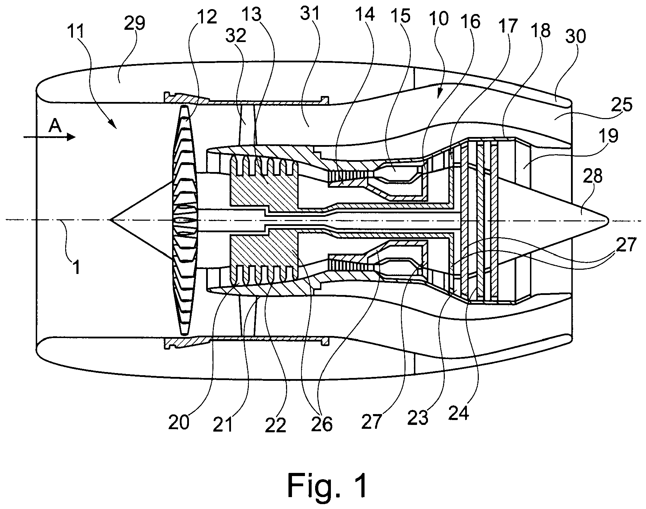

Das Fluggasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Schubdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1. Das Bezugszeichen 28 zeigt einen Auslasskonus.

Weiterhin zeigt die Fig. 1 eine Unterteilung der Triebwerksverkleidung (Nacelle) in eine vordere Verkleidung 29 und eine hintere, in Axialrichtung, bezogen auf die Triebwerksachse bzw. die Strömungsrichtung, verschiebbare hintere Verkleidung 30. Zwischen dem Kerntriebwerksgehäuse 21 und den äußeren Verkleidungen 29 und 30 ist ein Nebenstromkanal 31 gebildet. Dieser weist eine Austrittsdüse 25 auf, welche durch eine axiale Verschiebung der hinteren Verkleidung 30 in ihrem Querschnitt eingestellt werden kann, um die Strömungsverhältnisse am Fan 12 zu beeinflussen und insbesondere ein Flattern des Fans zu vermeiden.

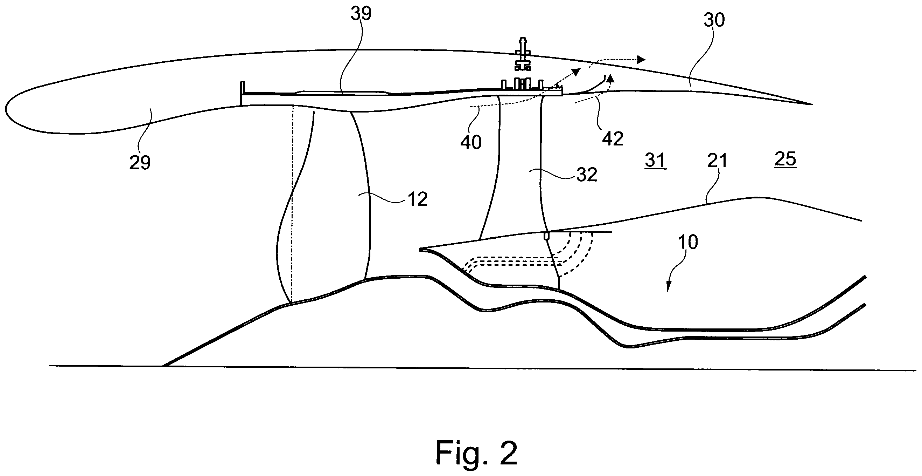

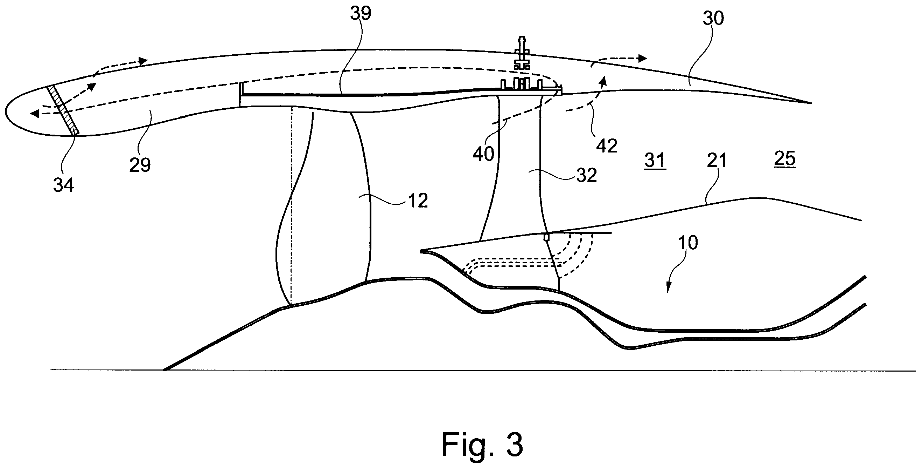

Die Fig. 2 und 3 zeigen jeweils eine vereinfachte Seiten-Teilschnittansicht in einer Radialebene. Dabei ist insbesondere der Nebenstromkanal 31 verdeutlicht, welcher zwischen dem Kerntriebwerksgehäuse 21 und der vorderen Verkleidung 29 und der hinteren Verkleidung 30 gebildet ist. Stromab des Fans 12 sind Statorschaufeln 32 angeordnet, an deren radial äußeren Bereichen an einem die Statorschaufeln 32 lagernden Fangehäuse 39 im Einzelnen nicht dargestellte Ausnehmungen ausgebildet sind, um Kühlluft 40 aus dem Nebenstromkanal 31 in die vordere Verkleidung 29 abzuleiten.

Im Rahmen der Beschreibung der Erfindung beziehen sich die Begriffe "vorderer" und "hinterer" jeweils auf die Strömungsrichtung an der Triebwerksverkleidung bzw. durch den Nebenstromkanal. Die Begriffe "innen" und "außen" beziehen sich jeweils auf eine Radialrichtung, ausgehend von der Triebwerksachse oder deren Axialrichtung.

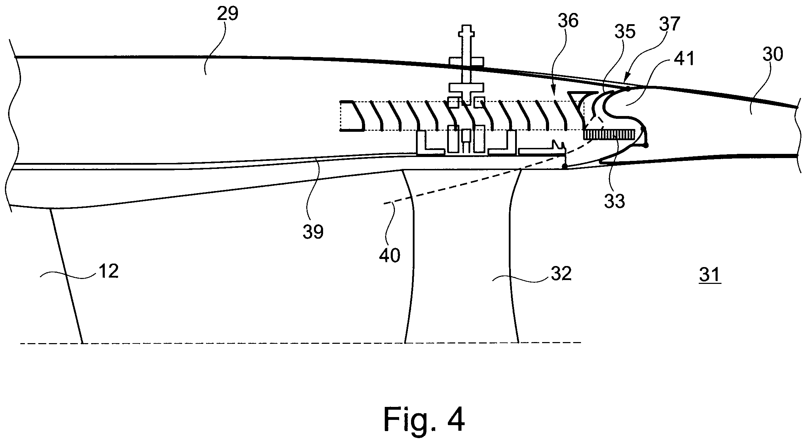

Die Fig. 2 zeigt eine Reisekonfiguration (cruise mode). Dabei wird Luft innerhalb der Statorschaufeln 32 (OGVs) vor dem Endbereich des Fangehäuses 39 extrahiert und durch einen (nicht dargestellten) Wärmetauscher radial nach außen geleitet. Hierdurch wird zwischen der vorderen Verkleidung 29 und der hinteren Verkleidung 30 ein Spalt 37 gebildet, durch welchen Luft, geführt durch zumindest eine hintere Schaufel 35 eines Kaskadenelements 36 und eine gerundete Vorderkante 41 des vorderen Bereichs der hinteren Verkleidung 30 zur Umgebung hin abgeleitet wird. Diese Luft ist in Fig. 2 durch die Fluidströmung 42 gezeigt. Diese Strömung 42 ist nur bei take-off (Konfiguration mit maximaler Startleistung) aktiv - und bedingt eine Teilverschiebung/-öffnung der hinteren Verkleidung 30 (Nacelle) nach hinten. Die Ableitung der Fluidströmung 42 aus dem Nebenstromkanal 31 dient zur Verstellung des Querschnitts der Austrittsdüse 25 - was wiederum nur bei take-off (zumindest eine Vergrößerung) - nötig ist. Wie die Fig. 4 zeigt, ist im Bereich zwischen der vorderen Verkleidung 29 und der hinteren Verkleidung 30 und somit am rückwärtigen Bereich des Fangehäuses 39 ein Wärmetauscher 33 angeordnet, welcher als Oberflächenkühler und/oder als Matrixkühler ausgebildet sein kann. Die Fig. 4 zeigt die Anordnung des Wärmetauschers 33 (Ölkühler) in schematischer Weise, er kann auch parallel zur Strömungsrichtung orientiert sein. Es ergibt sich somit (s. Fig. 2 und 4), dass zumindest ein Teil der Strömung, welche durch den Spalt 37 abgeleitet wird, aus den Ausnehmungen im Bereich der Statorschaufeln 32 entnommen werden kann.

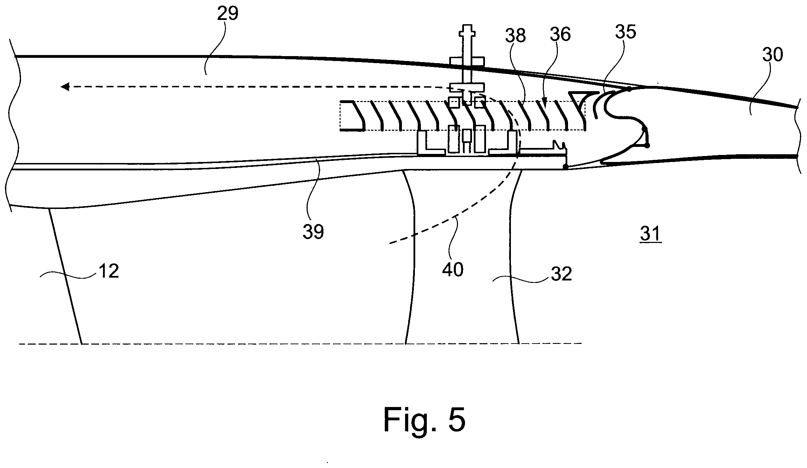

Die Fig. 3 und 5 zeigen einen weiteren Wärmetauscher 34, welcher im Anströmbereich der vorderen Verkleidung 29 angeordnet ist. Wie sich aus Fig. 5 ergibt, werden Schaufeln 38 des Kaskadenelements 36, welche in einer Schubumkehrstellung des Kaskadenelements 36 zur Leitung der Schubumkehrströmung verwendet werden genutzt, um die Kühlluft 40 umzulenken und gegen die Hauptströmungsrichtung innerhalb der vorderen Verkleidung 29 zu dem Wärmetauscher 34 (Ölkühler) zu leiten. Nachdem die Kühlluft den Wärmetauscher 34 durchströmt hat, wird sie, wie in Fig. 3 dargestellt, zur Umgebung hin abgeleitet. Die Wärmemenge in dem Wärmetauscher 34 kann auch zur Enteisung/Heizung des Anströmbereichs der vorderen Verkleidung 29 verwendet werden.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Schubdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Austrittsdüse
- 26: Kompressortrommel oder -scheibe
- 27: Turbinenrotornabe
- 28: Auslasskonus
- 29: Vordere Verkleidung
- 30: Hintere Verkleidung
- 31: Nebenstromkanal
- 32: Statorschaufel
- 33: Wärmetauscher
- 34: Wärmetauscher
- 35: Schaufel
- 36: Kaskadenelement
- 37: Spalt
- 38: Schaufel
- 39: Fangehäuse
- 40: Kühlluft
- 41: gerundete Vorderkante
- 42: Fluidströmung

## Patentansprüche

1. Fluggasturbinentriebwerk, mit einem Kerntriebwerk (10) und einem dieses umgebenden Nebenstromkanal (31), mit einer den Nebenstromkanal (31) umschließenden vorderen Verkleidung (29) und einer hinteren Verkleidung (30), sowie mit in dem Nebenstromkanal (31) angeordneten Statorschaufeln (32), wobei im Bereich der Statorschaufeln (32) an der Innenseite der vorderen Verkleidung (29) Ausnehmungen zur Ableitung von Fluid (40) aus dem Nebenstromkanal (31) ausgebildet sind, wobei das durch die Ausnehmungen abgeführte Fluid (40) mittels Strömungskanälen durch die vordere Verkleidung (29) geführt, mit zumindest einem Wärmetauscher (33, 34) in Kontakt gebracht und nachfolgend zur Umgebung abgeleitet wird, **dadurch gekennzeichnet, dass** die hintere Verkleidung (30) in Axialrichtung verschiebbar ist, dass im Bereich zwischen der vorderen Verkleidung (29) und der hinteren Verkleidung (30) ein Kaskadenelement (36) angeordnet ist, dass der beziehungsweise zumindest einer der Wärmetauscher (34) im Anströmbereich der vorderen Verkleidung (29) angeordnet ist, und dass das Fluid (40) durch zur Schubumkehr dienende Schaufeln (38) des Kaskadenelements (36) in den Anströmbereich geleitet wird.

2. Fluggasturbinentriebwerk nach Anspruch 1, **dadurch gekennzeichnet, dass** der Wärmetauscher (34) innerhalb der vorderen Verkleidung (29) angeordnet ist.

3. Fluggasturbinentriebwerk nach Anspruch 1 oder 2, **dadurch gekennzeichnet, dass** zumindest ein weiterer Wärmetauscher (33) im Bereich zwischen der vorderen Verkleidung (29) und der hinteren Verkleidung (30) angeordnet ist.

4. Fluggasturbinentriebwerk nach Anspruch 3, **dadurch gekennzeichnet, dass** das Fluid (40) nach dem zumindest einen weiteren Wärmetauscher (33) durch Schaufeln (35) des im Bereich zwischen der vorderen Verkleidung (29) und der hinteren Verkleidung (30) angeordneten Kaskadenelement (36) strömungsoptimiert geführt und durch einen Spalt (37) zwischen der vorderen Verkleidung (29) und der hinteren Verkleidung (30) abgeleitet wird.

5. Fluggasturbinentriebwerk nach einem der Ansprüche 1 bis 4, **dadurch gekennzeichnet, dass** das Fluid (40) nach dem beziehungsweise zumindest einem der im Anströmbereich der vorderen Verkleidung angeordneten Wärmetauscher (34) zur Heizung des Anströmbereichs durch diesen geleitet und nachfolgend zur Umgebung abgeleitet wird.

## Claims

1. Aircraft gas-turbine engine with a core engine (10) and a bypass duct (31) surrounding the latter, with a front cowling (29) enclosing the bypass duct (31) and a rear cowling (30), and with stator vanes (32) arranged in the bypass duct (31), wherein recesses for removing fluid (40) from the bypass duct (31) are provided in the area of the stator vanes (32) on the inside of the front cowling (29), wherein the fluid (40) discharged through the recesses is routed by means of flow ducts through the front cowling (29), brought into contact with at least one heat exchanger (33, 34), and subsequently discharged to the environment, **characterized in that** the rear cowling (30) is movable in the axial direction, that a cascade element (36) is arranged in the area between the front cowling (29) and the rear cowling (30), that the heat exchanger or at least one of the heat exchangers (34) is arranged in the inflow area of the front cowling (29), and that the fluid (40) is routed into the inflow area by vanes (38) of the cascade element (36) intended for thrust reversal.

2. Aircraft gas-turbine engine in accordance with Claim 1, **characterized in that** the heat exchanger (34) is arranged inside the front cowling (29).

3. Aircraft gas-turbine engine in accordance with Claim 1 or 2, **characterized in that** at least one further heat exchanger (33) is arranged in the area between the front cowling (29) and the rear cowling (30).

4. Aircraft gas-turbine engine in accordance with Claim 3, **characterized in that** the fluid (40) is routed, past the at least one further heat exchanger (33), through vanes (35) of the cascade element (36) arranged in the area between the front cowling (29) and the rear cowling (30) in a flow-optimized manner and discharged through a gap (37) between the front cowling (29) and the rear cowling (30).

5. Aircraft gas-turbine engine in accordance with one of the Claims 1 to 4, **characterized in that** the fluid (40) is routed, past the heat exchanger or at least one of the heat exchangers (34) arranged in the inflow area of the front cowling, through the inflow area for heating the latter and subsequently discharged to the environment.

## Revendications

1. Moteur d'avion à turbine à gaz avec un moteur de base (10) et un canal de flux secondaire (31) entourant celui-ci, avec un carénage avant (29) entourant le canal de flux secondaire (31) et un carénage arrière (30) ainsi qu'avec des aubes de stator (32) disposées dans le canal de flux secondaire (31), sachant que des évidements destinés à évacuer du fluide (40) provenant du canal de flux secondaire (31) sont constitués dans la zone des aubes de stator (32) sur la face intérieure du carénage avant (29), sachant que le fluide (40) évacué à travers les évidements est guidé à travers le carénage avant (29) au moyen de canaux d'écoulement, est mis en contact avec au moins un échangeur thermique (33, 34) et évacué ensuite dans l'environnement, **caractérisé en ce que** le carénage arrière (30) est déplaçable dans le sens axial, qu'un élément de cascade (36) est disposé dans la zone située entre le carénage avant (29) et le carénage arrière (30), que l'échangeur thermique ou au moins un des échangeurs thermiques (34) est disposé dans la zone d'afflux du carénage avant (29) et que le fluide (40) est guidé dans la zone d'afflux par des aubes (38) de l'élément de cascade (36), servant à l'inversion de poussée.

2. Moteur d'avion à turbine à gaz selon la revendication n° 1, **caractérisé en ce que** l'échangeur thermique (34) est disposé à l'intérieur du carénage avant (29).

3. Moteur d'avion à turbine à gaz selon la revendication n° 1 ou n° 2, **caractérisé en ce qu'**au moins un autre échangeur thermique (33) est disposé dans la zone située entre le carénage avant (29) et le carénage arrière (30).

4. Moteur d'avion à turbine à gaz selon la revendication n° 3, **caractérisé en ce que** le fluide (40) en aval dudit au moins un autre échangeur thermique (33) est guidé de manière optimisée pour le flux, à travers des aubes (35) de l'élément de cascade (36) disposé dans la zone située entre le carénage avant (29) et le carénage arrière (30) et est évacué à travers une fente (37) située entre le carénage avant (29) et le carénage arrière (30).

5. Moteur d'avion à turbine à gaz selon une des revendications n° 1 à n° 4, **caractérisé en ce que** le fluide (40) en aval de l'échangeur thermique ou d'au moins un des échangeurs thermiques (34) disposés dans la zone d'afflux du carénage avant est guidé à travers la zone d'afflux afin de la chauffer, et évacué ensuite dans l'environnement.
